(19) **Europäisches Patentamt / European Patent Office / Office européen des brevets**

(11) **EP 4 268 475 B1**

(12) **EUROPEAN PATENT SPECIFICATION**

(45) Date of publication and mention
of the grant of the patent:
**02.07.2025 Bulletin 2025/27**

(21) Application number: **21843851.3**

(22) Date of filing: **22.12.2021**

(51) International Patent Classification (IPC):
*H04R 3/02* (2006.01)    *H04M 3/56* (2006.01)
*H04M 3/00* (2024.01)    *H04M 9/08* (2006.01)

(52) Cooperative Patent Classification (CPC):
**H04M 3/002; H04M 3/568; H04M 9/082; H04R 3/02;**
H04M 2203/2094

(86) International application number:
**PCT/US2021/064883**

(87) International publication number:
**WO 2022/140557 (30.06.2022 Gazette 2022/26)**

(54) **ACOUSTIC FEEDBACK REDUCTION IN CO-LOCATED AUDIOCONFERENCING DEVICES**

AKUSTISCHE RÜCKKOPPLUNGSUNTERDRÜCKUNG IN NAHESTEHENDEN AUDIOKONFERENZGERÄTEN

RÉDUCTION DE FEEDBACK DANS LES APPAREILS POUR CONFÉRENCES AUDIO SE TROUVANT DANS LE MÊME ESPACE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.12.2020 PCT/CN2020/138271**
**27.01.2021 US 202163142018 P**
**02.02.2021 EP 21154740**

(43) Date of publication of application:
**01.11.2023 Bulletin 2023/44**

(73) Proprietor: **Dolby Laboratories Licensing Corporation**
**San Francisco, CA 94103 (US)**

(72) Inventors:
• **FANG, Qianqian**
**San Francisco, California 94103 (US)**

• **LI, Kai**
**San Francisco, California 94103 (US)**
• **GUO, Yanmeng**
**San Francisco, California 94103 (US)**
• **HUANG, Wei**
**San Francisco, California 94103 (US)**
• **LIU, Yang**
**San Francisco, California 94103 (US)**

(74) Representative: **Dolby International AB**
**Patent Group Europe**
**77 Sir John Rogerson's Quay**
**Block C**
**Grand Canal Docklands**
**Dublin, D02 VK60 (IE)**

(56) References cited:
**EP-A1- 1 920 587       EP-A1- 3 070 876**
**EP-A1- 3 253 039       US-A1- 2018 124 128**
**US-A1- 2018 277 133**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Cross-reference to related application

This application claims priority of the following priority applications: EP application 21154740.1, filed 02 February 2021, PCT application PCT/CN2020/138271, filed 22 December 2020 and US provisional application 63/142,018, filed 27 January 2021.

Technical field

The present disclosure relates to managing acoustic feedback in real-time audio communication.

Background

In multiparty communications including real-time audio communication, such as in multiparty conferences and multiparty games, audio feedback, also known as howl, may occur. Such audio feedback is typically disturbing to the parties participating the multiparty communications and hence measures to remove or mitigate it has been provided using analysis of acoustic features audio signals in the multiparty communications in order to identify occurrence of audio feedback and then remove or mitigate the audio feedback.

EP 3 070 876 A1, EP 3 253 039 A1 and US 2018/124128 A1 disclose methods for detecting collocated devices in a communications system in view of preventing howling.

Summary

An object of the present disclosure is to provide an improved managing of acoustic feedback.

According to the invention, there is provided a method for managing acoustic feedback in real-time audio communications in a communications system according to claim 1. Also according to the invention, there is provided a communications system according to claim 10.

By identifying that the three criteria are met that the first communication device is in loudspeaker mode, that the first communication device is in real-time audio communications with the second communication device, and that the first communication device and the second communication device are in the same acoustic space, a risk that acoustic feedback may occur is identified. As the criteria being met can be identified even before any sound has been feedback via the first communication device, the risk for acoustic feedback may be identified even before any acoustic feedback has occurred.

According to another aspect of the present disclosure, a communications system comprising a first communication device, a second communication device, a detection module, and a mitigation module is provided. The system is configured to perform the method according to the first aspect.

Brief description of the drawings

Embodiments of the present disclosure will be described in more detail with reference to the appended drawings, wherein

FIG. 1 shows a flow chart of an embodiment of a method for managing acoustic feedback in real-time audio communications according to the present disclosure,
FIG. 2a shows a schematic block diagram of a first embodiment of a communications system configured to perform a method according to the present disclosure,
FIG. 2b shows a schematic block diagram of a second embodiment of a communications system configured to perform a method according to the present disclosure,
FIG. 2c shows a schematic block diagram of a third embodiment of a communications system configured to perform a method according to the present disclosure,
FIG. 3 shows a schematic block diagram of a communication device comprising circuitry configured to perform a method according to the present disclosure,
FIG.4 shows a schematic block diagram of an encoder according to the present disclosure,
FIG. 5 shows a schematic block diagram of a decoder according to the present disclosure.

Detailed description

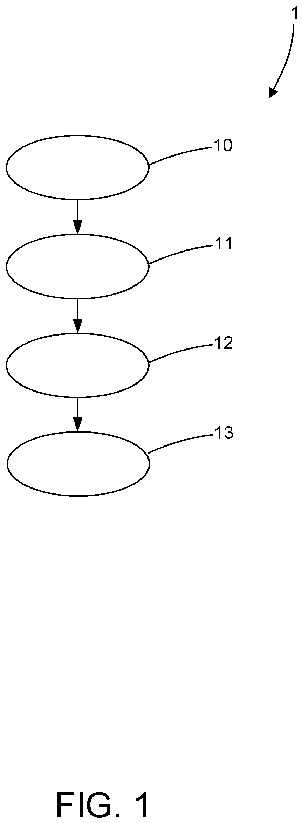

FIG. 1 shows a flow chart of an embodiment of a method 1 for managing acoustic feedback in real-time audio communications in a communications system.

By real-time audio communications may here be understood any audio transmission between two or more communication devices occurring real-time, i.e. live, including audio an audio call, a video call with audio, a conference call, or the like. Real-time in this should be construed as a continuous audio data transmission performed in real-time or approximately real-time, such as a voice call or the like, where it is intended that audio reaches the receiver with as short timely delay as possible without influencing the intelligibility of the audio.

In some embodiments, the communications system comprises the first client, the second client, and a communications server, wherein one or more of the detection module and the mitigation module is provided in the communications server.

The method 1 comprises determining 10, by means of a detection module, whether a first communication device is in loudspeaker mode based on hardware information in the first communication device.

The first communications device may be a phone, such as a cellular phone, a mobile phone, and/or a conference phone, a computer, a tablet computer, or the like. A loudspeaker mode may be a mode, in which the first communications device is configured to output sound, such as sound from the real-time audio communications, via one or more loudspeakers, such as one or more built-in loudspeakers.

In some embodiments, the first communications device may be in the loudspeaker mode, in a headphone mode, in which mode the first communications device is configured to output sound via headphones, or may be in a muted mode, in which the first communications device is configured not to output sound. The step of determining 10 may alternatively or additionally comprise determining a mode of the first communication device, the mode being selected from a loudspeaker mode, a headphone mode, and a muted mode based on hardware information in the first communication device.

Hardware information in the first communication device may comprise information relating to one or more of a status of a headphone output connection, such as whether a plug is inserted in a headphone output plug, whether headphones are communicatively connected wired and/or wirelessly, whether one or more loudspeakers, such as built-in loudspeakers and/or external loudspeakers, are communicatively connected to the first communication device, a default playback device, and a playback device selected for the real-time audio communication. In some embodiments, the method may further comprise obtaining from the first communication device and/or from the second communication device information regarding the type of communication device, such as identification information of the communication device. The identification information may allow the type of communication device to be determined, such as smartphone, tablet computer, conference device, laptop computer, desktop computer, or the like. Alternatively or additionally, the identification information may allow the manufacturer, version, Operating System (OS), OS version, hardware revision or the like, to be determined. In some embodiments the identification information may be obtained directly from the first and/or second communication device.

The detection module may be provided in the first communication device. Alternatively or additionally, where the real-time audio communication is provided via a server, the detection module may be provided in the server. Hence, the hardware information may be transmitted from the first communication device to the server.

In some embodiments, one or more of the detection module and the mitigation module is provided in the first device.

The method 1 moreover comprises determining 11, by means of the detection module, whether the first communication device is in real-time audio communications with a second communication device based on connection information in the first communication device.

Determining 11 whether the first communication device is in real-time audio communication with a second communication device may be carried out via software information from a communication module of the first device, data transmitted from the second device, and/or via a server, potentially through which real-time audio communication is controlled and/or routed.

The method 1 further comprises determining 12, by means of the detection module, whether the first communication device and the second communication device are in a same acoustic space based on sensor information in the first communication device.

By two devices being in the same "acoustic space" may here be understood that the two devices are in the same physical space and/or room and/or that the two devices are within a certain distance of each other.

The sensor information may be based on a non-acoustic sensor of the first communication device. Alternatively or additionally, the sensor information may be based on data transmission between the first and the second device.

In some embodiments, the sensor information of the first device is based on a wireless communication interface of the first device.

The wireless communication interface of the first device may be a wireless communication interface for digital data communication. The wireless communication interface may comprise a transmitter, potentially configured to transmit a wireless communication signal, and a receiver, potentially configured to receive a wireless communication signal. The wireless communication interface may be configured for short-range wireless communication, such as communication in a 2.4 GHz frequency band, in a 5 GHz frequency band, and/or in a 6 GHz frequency band.

The wireless communication interface may comprise or be a Bluetooth® interface, such as a Bluetooth® Low Energy (LE) interface. Alternatively or additionally, the wireless communication interface may comprise or be a Wi-Fi wireless network interface, potentially configured to function in accordance with an IEEE 802.11 standard.

In some embodiments, both the first and the second devices comprise a wireless communication interface. Determining 12 whether the first and second devices are in the same acoustic space may be based on sensor information of both the first and second devices.

In some embodiments, the method further comprises determining, by means of the detection module, a distance between the first communication device and the second communication device based on sensor information in the first communication device. The first communication device and the second communication device are determined to be in the same acoustic space if the distance between the first communication device and the second communication device is less than a distance threshold.

The determined distance may be an estimated distance. For instance, where the sensor information comprises information from a wireless communication interface, the distance may be estimated based on received signals.

The distance threshold may be predetermined. In some embodiments, the distance threshold is 10 m or less, such as 8 m, 6 m, 5 m, 4 m, 3 m, 2 m, or 1 m.

In one embodiment, potentially where the wireless communication interface comprises a Bluetooth® interface, the distance is determined based on a Received Signal Strength Indication (RSSI) measurement of the signal received at the first communication device from the second communication device. Where Bluetooth LE is used, the signal received at the first communication device may be a connection packet, such as a connection request packet, a connection response packet, a data packet, and/or an advertisement packet from the second communication device. The relationship between the RSSI and the distance may be described as:

$$RSSI_{dBm} = -10\,n\log_{10}(d) + A(l)$$

where $d$ is the distance, $n$ is a real number between two and four depending on environment conditions and $A(l)$ is a RSSI value read at an arbitrarily selected distance.

Hence, the distance may be determined from the RSSI as:

$$d = 10^{\frac{A(l)-RSSI_{dBm}}{10\,n}}$$

Thereby an estimated distance may be determined based on the received signal strength.

Alternatively or additionally, the distance may, potentially where the wireless communication interface comprises a Wi-Fi interface, be determined based on a round-trip time (RTT). The first communication device may determine the distance using a Wi-Fi access point. Additionally or alternatively, the first communication device may peer the second communication device, which may be a Wi-Fi Aware device. The determined distance may be an estimated distance. The RTT may be determined in accordance with a standard under IEEE 802.11.

The method 1 further comprises, upon determining by means of the detection module that: the first communication device is in loudspeaker mode, the first communication device is in real-time audio communications with the second communication device, and the first communication device and the second communication device are in the same acoustic space, providing 13, to a mitigation module, a request signal for requesting one or more measures against acoustic feedback.

The mitigation module may be a module configured to mitigate feedback. The mitigation module may be arranged in the first communication device, in the second communication device, and/or in a server, via which the real-time audio communication may be routed.

The request signal may be provided as metadata to audio data of the real-time audio communication. The request signal may be provided from the first communication device and/or, where a server, via which the real-time audio communication is routed, is provided, from the server. The request signal may alternatively be provided as a separate signal, potentially via the same connection. The request signal may comprise an indication, such as a flag, a binary value, a hexadecimal value, a text string, or the like, that one or more measures against acoustic feedback is desired and/or needed. Alternatively or additionally, the request signal may comprise an indication that it has been determined that the first communication device is in loudspeaker mode, the first communication device is in real-time audio communications with the second communication device, and the first communication device and the second communication device are in the same acoustic space.

The request signal may be provided where no acoustic feedback has occurred but where the conditions for an occurrence of acoustic feedback have been met.

In some embodiments, the method further comprises upon determining by means of the detection module that: the first communication device is in loudspeaker mode, the first communication device is in real-time audio communications with the second communication device, and the first communication device and the second communication device are in the same acoustic space, determining, by means of the detection module, a state in the first communication device indicating a need for measures against acoustic feedback.

The state may indicate that acoustic feedback occurs and/or is likely to occur. In some embodiments, the state in the first communication device may represent a state of the communication system. The request signal may comprise or consist of the state. Alternatively or additionally, the request signal may be provided in response to determining the state in the first communication device.

Where measures against acoustic feedback are taken, the state in the first communication device may be determined as a state indicating no need for measures, or further measures, against acoustic feedback. Alternatively, where measures against acoustic feedback have been taken, determining steps 10, 11, and 12 may be performed again subsequent to the measures being taken, and, where it is determined that the first communication device is in loudspeaker mode, the first communication device is in real-time audio communications with the second communication device, and the first communication device and the second communication device are in the same acoustic space, the state in the first communication device indicating a need for measures against acoustic feedback may be determined again and/or may be maintained.

In some embodiments, the method further comprises providing, by the mitigation module, one or more measures against acoustic feedback in response to receiving, at the mitigation module, the request signal.

In some embodiments, the one or more measures against acoustic feedback include one or more of: decreasing, by means of the mitigation module, a playback volume of the first communication device, decreasing, by means of the mitigation module, a microphone gain of the second communication device, sending a notification to the first communication device requesting a user to switch to headphone mode, sending a notification to the first communication device requesting the user to mute a microphone of the first communication device, sending a notification to the first communication device requesting the user to mute a loudspeaker of the first communication device, and suppressing audio received from the first communication device.

The mitigation module may be arranged in the first communication device, the second communication device, and/or may be arranged in a server, via which the real-time audio communication is routed.

Where the one or more measures comprise a notification to the first communication device requesting a user to take an action, the first and/or second communication devices may be configured to receive a request from the mitigation module and/or to display, to a user, the request, such as a request to mute a microphone of the first communication device, a request to mute a loudspeaker of the first communication device. In some embodiments, the first and/or second communication devices are configured, potentially by the detection module where this is arranged in the first and/or second communication devices, to transmit to the mitigation module a confirmation that the request has been provided to a user and/or a confirmation that the action has been taken by the user.

In some embodiments, the mitigation module is trained using a machine-learning algorithm.

It will be appreciated that the machine-learning algorithm may be implemented in any known manner. For instance, the mitigation module may be configured select one or more measures against acoustic feedback based on, whether feedback occurs or not and/or based on whether the feedback occurs as an audible echo or as a howling note, such as based on information about whether a current state of the communications system is stable, marginally stable, or unstable.

In some embodiments, the method further comprises: upon determining the state in the first communication device, determining, by means of the detection module, a playback volume of the first communication device based on hardware information in the first communication device; and determining, by means of the detection module, a microphone gain of the second communication device based on hardware information in the second communication device. Alternatively or additionally, the playback volume and/or the microphone gain may be determined in response to determining that the first device is in loudspeaker mode. In some embodiments, the playback volume of the first device is a playback volume of a loudspeaker, such as a built-in loudspeaker, of the first device. Alternatively or additionally, the microphone gain of the second device may be a microphone gain of a microphone, such as a built-in microphone, of the second device.

The playback volume and/or the hardware information of the first communication device and the microphone gain and/or the hardware information of the second communication device may be transmitted to the detection module, potentially arranged in a server, via which the real-time audio communication is routed. Alternatively or additionally, the playback volume of the first communication device may be determined by a first detection module, potentially arranged in the first communication device, and the microphone gain of the second communication device may be determined by a second detection module, potentially arranged in the second communication device.

According to the claimed invention, the distance threshold is based on the determined playback volume of the first communication device and the determined microphone gain of the second communication device.

For instance, where a playback volume of the first communication device and a microphone gain of the second communication device both are high, a high distance threshold may correspondingly be set. Hence, two communication devices arranged at a certain distance from each other may be considered as being in the same acoustic space, when the playback volume and microphone gain are high, whereas they may not be considered to be in the same acoustic space, if the playback volume and/or microphone gain is/are turned down.

In some embodiments, the method further comprises: determining that the playback volume of the first communication device is above a playback volume threshold, wherein the one or more measures against acoustic feedback, in response to determining that the playback volume is above the playback volume threshold include one or more of: sending a notification to the first communication device requesting the user to switch to headphone mode decreasing, by means of the mitigation module, the playback volume of the first communication device.

The notification may be displayed to a user by means of a display of the first communication device and/or may be communicated to user by means of one or more of an audio cue, haptic feedback and light indication.

In some embodiments, the playback volume threshold is determined based on the distance between the first communication device and the second communication device.

The playback volume threshold may be determined at least partly based on the distance between the first communication device and the second communication device. In some embodiments, the playback volume threshold may increase with the distance between the first communication device and the second communication device.

The playback volume threshold may be or form a mathematical function of the distance between the first communication device and the second communication device. The playback volume threshold may be proportional to the distance between the first communication device and the second communication device.

In some embodiments, the playback volume threshold, *PlaybackVolume$_{Th}$* may be expressed as:

$$PlaybackVolume_{Th} = \max\left(1 - \frac{distance}{dist_{Th}}, 0\right)$$

where *distance* is the determined distance between the first and second communication device, and *dist$_{Th}$* is the distance threshold. The distance threshold may in an exemplary embodiment be approximately 5 metres. The *PlaybackVolumeTh* may be a factor of reduction of the maximum playback volume of the first communication device. For example, where the distance threshold is 5 metres and the estimated distance is 2 metres, *PlaybackVolumeTh* may be 0.6, indicating that the threshold volume is the maximum playback volume of the first communication device reduced by 60 %, i.e. 40 % of the maximum playback volume of the first communication device. If the determined distance gets larger than the distance threshold, i.e. where the relation between the determined distance and the distance threshold is above 1, *PlaybackVolumeTh* will be 0, thus indicating that the threshold volume is the maximum playback volume of the first communication device, i.e. the threshold volume is the maximum playback volume of the first communication device reduced by 0 %.

In some embodiments, the playback volume threshold is determined based on a microphone gain of the second communication unit.

The playback volume threshold may be determined at least partly based on the microphone gain of the second communication device. In some embodiments, the playback volume threshold may decrease when the microphone gain of the second communication device is increased.

The playback volume threshold may be or form a mathematical function of the microphone gain of the second communication device. The playback volume threshold may be inversely proportional to the microphone gain of the second communication device.

In some embodiments, the method further comprises the step of: determining that a microphone gain of the second communication device is above a microphone gain threshold, wherein the one or more measures against acoustic feedback, in response to determining that the microphone gain is above the microphone gain threshold include: decreasing, by means of the mitigation module, the microphone gain of the second communication device.

The decrease of the microphone gain may be performed stepwise or by reducing the microphone gain by a predefined amount. Potentially, the microphone gain may be reduced to be at or below the microphone gain threshold. In some embodiments, a user of the second communication device is alerted that the microphone gain is reduced and/or may be prevented from increasing the gain for a predetermined time period after the gain decrease.

In some embodiments, the microphone gain threshold is determined based on the distance between the first communication device and the second communication device.

The microphone gain threshold may be a microphone gain threshold value. The microphone gain threshold may additionally or alternatively be determined at least partly based on the distance between the first communication device and the second communication device.

In some embodiments, the microphone gain threshold, *MicrophoneGain$_{Th}$*, may be expressed as:

$$Microphone\ gain_{Th} = \max\left(1 - \frac{distance}{dist_{Th}}, 0\right)$$

where *distance* is the determined distance between the first and second communication device, and *dist$_{Th}$* is the distance threshold. The distance threshold may in an exemplary embodiment be approximately 5 metres. The *MicrophoneGain$_{Th}$* may be a factor of reduction of the maximum microphone gain of the second communication device. For example, where the distance threshold is 5 metres and the estimated distance is 2 metres, *MicrophoneGain$_{Th}$* may be 0.6, indicating that the threshold microphone gain is the maximum microphone gain of the second communication device reduced by 60 %, i.e. 40 % of the maximum microphone gain of the second communication. If the determined distance gets larger than the distance threshold, i.e. where the relation between the determined distance and the distance threshold is above *1, MicrophoneGain$_{Th}$* will be 0, thus indicating that the microphone gain threshold is the maximum microphone gain of the second communication device, i.e. the microphone gain threshold is the maximum microphone gain of the second communication device reduced by 0 %.

In some embodiments, the microphone gain threshold is determined based on the playback volume of the second communication unit.

The microphone gain threshold may be determined at least partly based on the playback volume of the second communication unit.

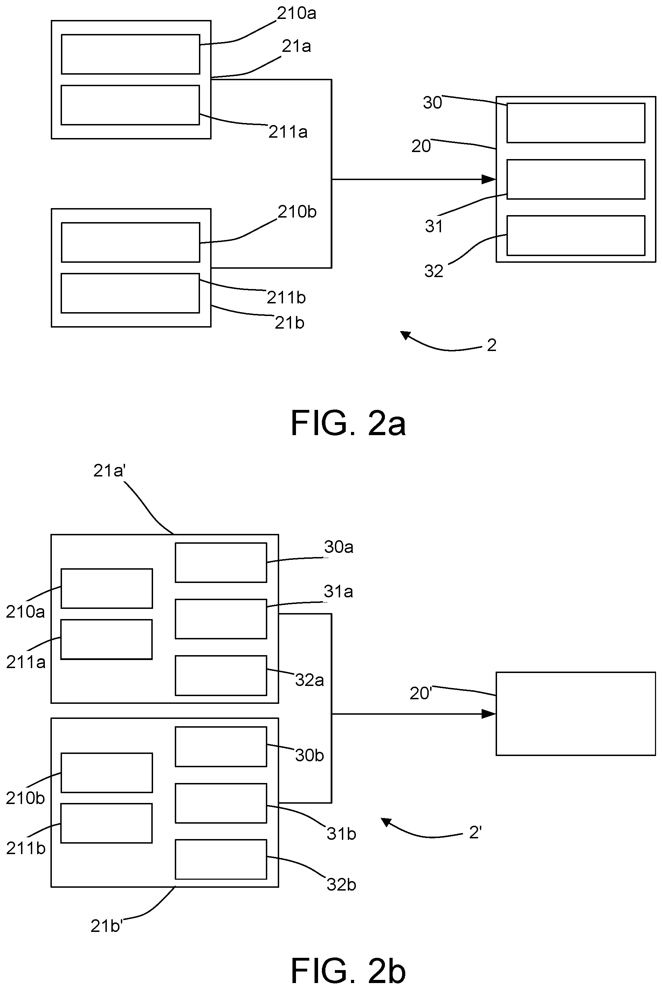

FIG. 2a shows a schematic block diagram of a first embodiment of a communications system 2 configured to perform a method according to the present disclosure.

The communications system 2 comprises a first communication device 21a and a second communication device 21b. The first communication device 21a is in real-time audio communication with the second communication device 21b. The real-time audio communication is routed via a server 20. The real-time audio communication may be any audio and/or video communication comprising real-time audio transmission, such as a point-to-point communication, e.g. Voice over Internet Protocol (VoIP) or software phone (softphone), or a peer-to-peer communication.

The first communication device 21a comprises a first audio interface 210a configured to record audio from and play back audio to a user of the first communication device 21a. Correspondingly, the second communication device 21b comprises a second audio interface 210b configured to record audio from and play back audio to a user of the second communication device 21b. It will be understood that in other embodiments, a recording interface and a playback interface may be provided alternatively or additionally to the respective audio interfaces 210a, 210b. The first 210a and second audio interfaces 210b may comprise an audio input device, such as a microphone, and an audio playback device, such as an audio processor, a headphone/speaker outlet, and/or one or more speakers.

The first communication device 21a further comprises a processor 211a. The processor 211a may be configured to monitor and register: a playback mode, such as a loudspeaker mode and a headphone mode, a playback level, and a microphone gain of the first audio interface 210a, as well as monitoring and registering sensor information (not shown in FIG. 2a) of the first communication device 21a. The processor 211a may furthermore be configured to monitor and register a microphone gain level of the second communication device 21a. Sensor information may be information from a wireless communication interface (not shown in FIG. 2a), such as a Bluetooth® and/or Wi-Fi module, of the first communication device 21a. The processor 211a may furthermore be configured to detect whether the first communication device is in real-time audio communication with the second communication device 21b.

Correspondingly, the second communication device 21b comprises a processor 211b. The processor 211b may be configured to monitor and register: a playback mode, such as a loudspeaker mode and a headphone mode, a playback level, and a microphone gain of the second audio interface 210b, as well as monitoring and registering sensor information (not shown in FIG. 2a) of the second communication device 21b. The processor 211b may furthermore be configured to monitor and register a microphone gain level of the second communication device 21b. Sensor information may be information from a wireless communication interface (not shown in FIG. 2a), such as a Bluetooth® and/or Wi-Fi module, of the second communication device 21b. The processor 211b may furthermore be configured to detect whether the second communication device is in real-time audio communication with the first communication device 21b.

Although the first 21a and second communication devices 21b are described as being similar, it will be appreciated that they may be different types of devices. For instance, each of the first 21a and second communication devices 21b may be a mobile phone, a tablet computer, a personal computer, a server, a personal digital assistant, or the like.

The server 20 comprises a detection module, comprising a feedback state detection module 30 and a feedback client detection module 31. The feedback state detection module 30 is configured to determine whether a need for one or more measures against acoustic feedback is present in the system 2. The feedback state detection module 30 may be configured to determine whether the first communication device 21a is in loudspeaker mode based on hardware information in the first communication device 21a, to determine whether the first communication device 21a is in real-time audio communications with the second communication device 21b based on connection information in the first communication device 21a, and to determine whether the first communication device 21a and the second communication device 21b are in a same acoustic space based on sensor information in the first communication device 21a. In some embodiments, the feedback state detection module 30 is configured to receive sensor information and information about one or more of a playback mode, a playback volume, sensor information, microphone gain, and/or any potential real-time audio communications from the first communication device 21a and/or from the second communication device 21b.

The feedback client detection module 31 may be configured to identify which of the communication devices 21a, 21b are causing acoustic feedback and/or are causing the system to be in a state, where feedback is likely to occur. The feedback client detection module 31 may be configured to identify such communication device 21a, 21b based on information from the client state detection module 30 and/or from the first 21a and/or second communication device 21b. In other embodiments, the client state detection module 30 may be configured to perform the functionality of the feedback client detection module 31.

The server 20 moreover comprises a mitigation module 32. The mitigation module may be configured to take measures against feedback, potentially upon request from the detection module, such as from one or more of the feedback state detection module 30 and feedback client detection module 31. The mitigation module 32 may be communicatively coupled to the detection module and/or to first communication device 21a and the second communication device 22. Further details and examples of measures against acoustic feedback are described with respect to the method 1.

FIG. 2b shows a schematic block diagram of a second embodiment of a communications system 2' configured to perform a method according to the present disclosure.

The system 2' comprises a first communication device 21a', a second communication device 21b' and a server 20'. Like the system 2 shown in FIG. 2a, the first communication device 21a' is in real-time audio communication with the second communication device 21b'. The real-time audio communication is routed via a server 20'.

The first communication device 21a' comprises a first audio interface 210a and a processor 211a as described with respect to the first communication device 21a shown in FIG. 2a. Correspondingly, the second communication device 21b' comprises a second audio interface 210b and a processor 211b as described with respect to the second communication device 21b shown in FIG. 2a.

The first communication device 21a' of system 2', however, comprises a first detection module, comprising a first feedback state detection module 30a and a first feedback client detection module 31a, and a first mitigation module 32a. The first feedback state detection module 30a and the first feedback client detection module 31a may be and/or comprise similar features as described with respect to the feedback state detection module 30, feedback client detection module 31, and mitigation module 32, respectively, of the server 20 shown in FIG. 2a.

The second communication device 21b' of system 2', moreover, comprises a second detection module, comprising a second feedback state detection module 30b and a second feedback client detection module 31b, and a second mitigation module 32b. The second feedback state detection module 30b and the second feedback client detection module 31b may be and/or comprise similar features as described with respect to the feedback state detection module 30, feedback client detection module 31, and mitigation module 32, respectively, of the server 20 shown in FIG. 2a.

Each of the first 32a and second mitigation modules 32b may be configured to receive a request for measures against acoustic feedback from the first and second detection modules, respectively. Alternatively or additionally, each of the first 32a and second mitigation modules 32b may be configured to receive a request for measures against acoustic feedback from the second and first detection modules, respectively.

As shown in FIG. 2b, the server 20' does not comprise any of the detection module and mitigation module. It will, however, be appreciated that, in some embodiments, the server as well as one or more of the first and second communication device may comprise a respective detection module and a mitigation module.

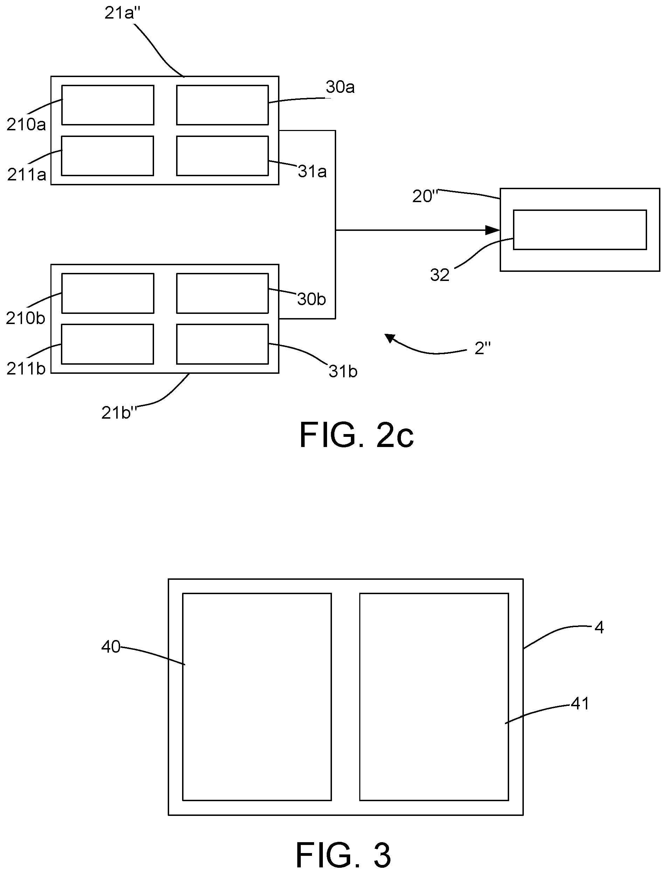

FIG. 2c shows a schematic block diagram of a third embodiment of a communications system 2" configured to perform a method according to the present disclosure.

The communications system 2" comprises a first communication device 21a", a second communication device 21b" and a server 20". Like the systems 2, 2' shown in FIGs. 2a and 2b, the first communication device 21a" is in real-time audio communication with the second communication device 21b". The real-time audio communication is routed via a server 20".

The first communications device 21a" comprises a first audio interface 210a and a processor 211a as described with respect to the first communication device 21a and 21a' shown in FIGs. 2a and 2b, respectively. The first communication device 21a" further comprises the first detection module, comprising the first feedback state detection module 30a and the first feedback client detection module 31a similar to the first communication device 21a'. Correspondingly, the second communications device 21b" comprises the second audio interface 210b and the processor 211b as described with respect to the second communication device 21b and 21b' shown in FIGs. 2a and 2b, respectively. The second communication device 21b" further comprises the second detection module, comprising the second feedback state detection module 30b and the second feedback client detection module 31b similar to the second communication device 21b'.

In the system 2", the server 20", however, comprises the mitigation module 32 as described with respect to the system 2 shown in FIG. 2a. Thereby, a central mitigation module 32 may be provided, potentially configured to be in communication with the respective mitigation modules of the first 21a" and second communication devices 21b". The mitigation module 32 may, thus, be configured to receive a request for measures against acoustic feedback from the first 21a" and/or the second communication device 21b".

The communications systems 2, 2', 2" are configured to perform the method 1. Features of the communications system 2, 2', 2" will exemplarily be further described in light of the method 1. It will, however, be appreciated that the method 1 may be performed by systems different from the exemplary embodiments of the communication systems shown in FIGs. 2a-2c.

FIG. 3 shows a schematic block diagram of a communication device 4 comprising circuitry configured to perform a method according to the present disclosure.

The communication device 4 comprises an audio interface 40 and a processor 41. The audio interface is configured to record audio from and play back audio to a user of the first communication device 4. In other embodiments, a recording interface and a playback interface may be provided alternatively or additionally to the audio interface 40. The audio interfaces 40 may comprise an audio input device, such as a microphone, and an audio playback device, such as an audio processor, a headphone/speaker outlet, and/or one or more speakers. The communication device 4 may comprise a wireless communication interface (not shown) for wireless communication, such as Bluetooth® or Wi-Fi wireless communication interface.

The communication device 4 moreover comprises a processor 41. The processor 41 may be configured to monitor and register: a playback mode, such as a loudspeaker mode and a headphone mode, a playback level, and a microphone gain of the audio interface 40, as well as monitoring and registering sensor information (not shown in FIG. 3) of the communication device 4. The processor 41 may furthermore be configured to monitor and register a microphone gain level of a communication device with which the communication device is in real-time audio communication. Sensor information may be information from a wireless communication interface (not shown in FIG. 2a), such as a Bluetooth® and/or Wi-Fi module, of the communication device 4. The processor 211a may furthermore be configured to detect whether the communication device 4 is in real-time audio communication with a second communication device.

The communication device 4 may furthermore comprise one or more of a detection module, potentially comprising a feedback state detection module and a feedback client detection module, and a mitigation module. The functionality of any one or more thereof may be provided by the processor 41. A detection module and/or a mitigation, where such are provided in the communication device 4, may be as described with respect to the method 1 and or to the systems 2, 2', or 2".

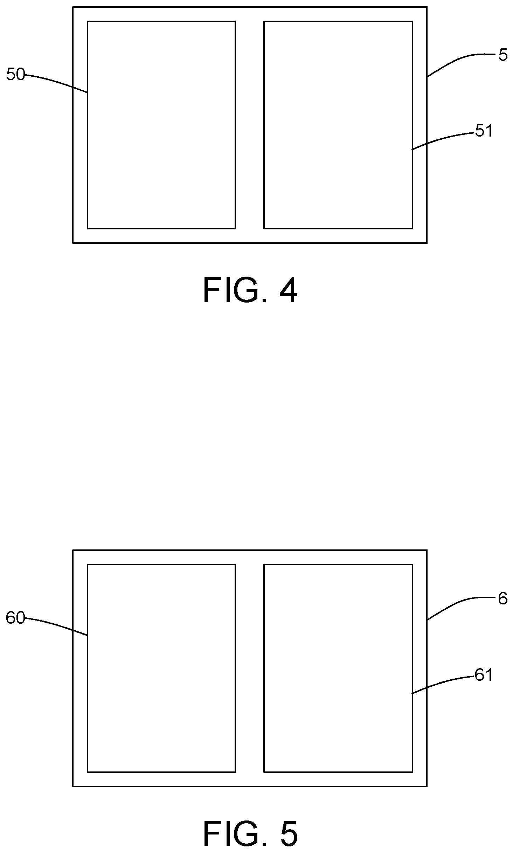

FIG.4 shows a schematic block diagram of an encoder 5 according to the present disclosure.

The encoder 5 comprises a memory 50 for storing instructions and a processor 51 for performing instructions. The encoder 5 is configured to encode an audio signal and include, in the encoded audio signal, metadata indicating whether there is a need for one or more measures against acoustic feedback.

The encoder 5 may receive an indication whether the metadata should be included in the encoded audio signal from a detection module. The detection module may be a detection module as described with respect to any of FIGs. 2a-2c or 3.

The encoder 5 may be arranged at a first communication device, the first communication device being configured to be in real-time audio communication with a second communication device.

The encoder 5 may be configured to encode the audio according to any known audio codec and to include metadata indicating whether there is a need for one or more measures against acoustic feedback.

The encoder 5 may be configured to receive an indication from a detection module, such as a detection module as described with respect to any of FIGs. 2a, 2b, and 2c. The encoder 5 may be configured to include such an indication in the metadata.

FIG. 5 shows a schematic block diagram of a decoder 6 according to the present disclosure.

The decoder 6 comprises a memory 60 for storing instructions and a processor 61 for performing instructions. The decoder is configured to decode an encoded audio signal; and extract, from the decoded audio signal, metadata indicating whether there is a need for measures against acoustic feedback.

The decoder 6 may be arranged at a second communication device, the second communication device being configured to be in real-time audio communication with a second communication device. Alternatively or additionally, the decoder may be arranged in a server, such as a server 20, 20', 20" as described with respect to any of FIGs. 2a, 2b, and 2c.

The decoder 6 may be configured to decode the audio according to any known audio codec, and to extract metadata indicating whether there is a need for one or more measures against acoustic feedback. In some embodiments, the decoder 6 may be configured to transmit the metadata indicating whether there is a need for one or more measures against acoustic feedback to a mitigation module for taking measures against acoustic feedback. The mitigation module may be a mitigation module 32, 3a, 32b as described with respect to FIGs. 2a, 2b, and 2c.

*Final remarks*

In the description provided herein, numerous specific details are set forth. However, it is understood that embodiments of the invention may be practiced without these specific details. In other instances, well-known methods, structures and techniques have not been shown in detail in order not to obscure an understanding of this description.

Thus, while there has been described specific embodiments of the invention, those skilled in the art will recognize that other and further modifications may be made. The scope of protection shall be limited solely by the appended claims. For example, any formulas given above are merely representative of procedures that may be used.

Systems, devices and methods disclosed hereinabove may be implemented as software, firmware, hardware or a combination thereof. For example, aspects of the present application may be embodied, at least in part, in a device, a system that includes more than one device, a method, a computer program product, etc. In a hardware implementation, the division of tasks between functional units referred to in the above description does not necessarily correspond to the division into physical units; to the contrary, one physical component may have multiple functionalities, and one task may be carried out by several physical components in cooperation. Certain components or all components may be implemented as software executed by a digital signal processor or microprocessor or be implemented as hardware or as an application-specific integrated circuit. Such software may be distributed on computer readable media, which may comprise computer storage media (or non-transitory media) and communication media (or transitory media). As is well known to a person skilled in the art, the term computer storage media includes both volatile and non-volatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information, and which can be accessed by a computer. Further, it is well known to the skilled person that communication media typically embodies computer readable instructions, data structures, program modules or other data in a modulated data signal such as a carrier wave or other transport mechanism and includes any information delivery media.

**Claims**

1. A method for managing acoustic feedback in real-time audio communications in a communications system (2) comprising a first communication device (21a) comprising a loudspeaker, and a second communication device (21b) comprising a microphone, the method comprising:

   determining (10), by means of a detection module, whether the first communication device is in loudspeaker mode based on hardware information in the first communication device;
   determining (11), by means of the detection module, whether the first communication device is in real-time audio communications with the second communication device based on connection information in the first communication device;
   determining (12), by means of the detection module, whether the first communication device and the second communication device are in a same acoustic space based on sensor information in the first communication device;
   upon determining by means of the detection module that:

   the first communication device is in loudspeaker mode,
   the first communication device is in real-time audio communications with the second communication device, and
   the first communication device and the second communication device are in the same acoustic space,

   providing (13), to a mitigation module, a request signal for requesting one or more measures against acoustic feedback,
   the method further comprising:
   determining, by means of the detection module, a distance between the first communication device and the second communication device based on sensor information in the first communication device;
   **characterized by**:

   determining, by means of the detection module, a playback volume of the first communication device based on hardware information in the first communication device; and

determining, by means of the detection module, a microphone gain of the second communication device based on hardware information in the second communication device,
wherein the first communication device and the second communication device are determined to be in the same acoustic space if the distance between the first communication device and the second communication device is less than a distance threshold, the distance threshold being based on the determined playback volume of the first communication device and the determined microphone gain of the second communication device.

2. The method according to claim 1, further comprising:
providing, by the mitigation module, the one or more measures against acoustic feedback in response to receiving, at the mitigation module, the request signal.

3. The method according to any one of the preceding claims, wherein the one or more measures against acoustic feedback include one or more of:

decreasing, by means of the mitigation module, the playback volume of the first communication device,
decreasing, by means of the mitigation module, the microphone gain of the second communication device,
sending a notification to the first communication device requesting a user to switch to headphone mode,
sending a notification to the first communication device requesting the user to mute the microphone of the first communication device,
sending a notification to the first communication device requesting the user to mute the loudspeaker of the first communication device, and
suppressing audio received from the first communication device.

4. The method according to any one of the preceding claims, wherein the method further comprises:

determining that the playback volume of the first communication device is above a playback volume threshold,
wherein the one or more measures against acoustic feedback, in response to determining that the playback volume is above the playback volume threshold include one or more of:
sending a notification to the first communication device requesting the user to switch to headphone mode, or
decreasing, by means of the mitigation module, the playback volume of the first communication device,
wherein the playback volume threshold is determined based on one or more of the distance between the first communication device and the second communication device, and a microphone gain of the second communication device.

5. The method according to any one of the preceding claims, wherein the method further comprises:

determining that the microphone gain of the second communication device is above a microphone gain threshold,
wherein the one or more measures against acoustic feedback, in response to determining that the microphone gain is above the microphone gain threshold include decreasing, by means of the mitigation module, the microphone gain of the second communication device,
wherein the microphone gain threshold is determined based on one or more of the distance between the first communication device and the second communication device and the playback volume of the second communication device.

6. The method according to any one of the preceding claims, wherein the sensor information of the first communication device is based on a non-acoustic sensor of the first communication device.

7. The method according to claim 6, wherein the sensor information of the first communication device is based on a wireless communication interface of the first communication device.

8. The method according to any one of the preceding claims, wherein one or more of the detection module and the mitigation module is provided in the first communication device or, wherein the communications system comprises the first communication device, the second communication device, and a communications server, wherein one or more of the detection module and the mitigation module is provided in the communications server.

9. The method according to any one of the preceding claims, wherein the loudspeaker of the first communication device is a built-in loudspeaker and wherein the microphone of the second communication device is a built-in microphone.

10. A communications system comprising a first communication device comprising a loudspeaker and a sensor, a second communication device comprising a microphone, a detection module, and a mitigation module, the system being configured to perform the method according to any one of claims 1 to 9.

**Patentansprüche**

1. Verfahren zum Verwalten von akustischer Rückkopplung in Echtzeit-Audiokommunikationen in einem Kommunikationssystem (2), das eine erste Kommunikationsvorrichtung (21a), die einen Lautsprecher und eine zweite Kommunikationsvorrichtung (21b) umfasst, die ein Mikrofon umfasst, wobei das Verfahren Folgendes umfasst:

   Bestimmen (10), mittels eines Erkennungsmoduls, ob sich die erste Kommunikationsvorrichtung im Lautsprechermodus befindet, basierend auf Hardwareinformationen in der ersten Kommunikationsvorrichtung;
   Bestimmen (11), mittels des Erkennungsmoduls, ob die erste Kommunikationsvorrichtung in Echtzeit-Audiokommunikationen mit der zweiten Kommunikationsvorrichtung steht, basierend auf Verbindungsinformationen in der ersten Kommunikationsvorrichtung;
   Bestimmen (12), mittels des Erkennungsmoduls, ob sich die erste Kommunikationsvorrichtung und die zweite Kommunikationsvorrichtung in einem selben akustischen Raum befinden, basierend auf Sensorinformationen in der ersten Kommunikationsvorrichtung;
   wenn mittels des Erkennungsmoduls bestimmt wird, dass:

      die erste Kommunikationsvorrichtung sich im Lautsprechermodus befindet,
      die erste Kommunikationsvorrichtung in Echtzeit-Audiokommunikationen mit der zweiten Kommunikationsvorrichtung steht, und
      die erste Kommunikationsvorrichtung und die zweite Kommunikationsvorrichtung sich in demselben akustischen Raum befinden, Bereitstellen (13), an ein Abschwächungsmodul, eines Anforderungssignals zum Anfordern einer oder mehrerer Maßnahmen gegen akustische Rückkopplung, wobei das Verfahren weiter umfasst:

         Bestimmen, mittels des Erkennungsmoduls, einer Entfernung zwischen der ersten Kommunikationsvorrichtung und der zweiten Kommunikationsvorrichtung basierend auf Sensorinformationen in der ersten Kommunikationsvorrichtung;
         **gekennzeichnet durch**:

            Bestimmen, mittels des Erkennungsmoduls, einer Wiedergabelautstärke der ersten Kommunikationsvorrichtung basierend auf Hardwareinformationen in der ersten Kommunikationsvorrichtung; und
            Bestimmen, mittels des Erkennungsmoduls, einer Mikrofonverstärkung der zweiten Kommunikationsvorrichtung basierend auf Hardwareinformationen in der zweiten Kommunikationsvorrichtung, wobei bestimmt wird, dass sich die erste Kommunikationsvorrichtung und die zweite Kommunikationsvorrichtung in demselben akustischen Raum befinden, wenn die Entfernung zwischen der ersten Kommunikationsvorrichtung und der zweiten Kommunikationsvorrichtung geringer als ein Entfernungsschwellenwert ist, wobei der Entfernungsschwellenwert auf der bestimmten Wiedergabelautstärke der ersten Kommunikationsvorrichtung und der bestimmten Mikrofonverstärkung der zweiten Kommunikationsvorrichtung basiert.

2. Verfahren nach Anspruch 1, weiter umfassend:
   Bereitstellen, durch das Abschwächungsmodul, der einen oder mehreren Maßnahmen gegen akustische Rückkopplung als Reaktion auf den Empfang des Anforderungssignals am Abschwächungsmodul.

3. Verfahren nach einem der vorstehenden Ansprüche, wobei die eine oder mehreren Maßnahmen gegen akustische Rückkopplung eines oder mehrere des Folgenden beinhalten:

   Verringern, mittels des Abschwächungsmoduls, der Wiedergabelautstärke der ersten Kommunikationsvorrichtung,
   Verringern, mittels des Abschwächungsmoduls, der Mikrofonverstärkung der zweiten Kommunikationsvorrichtung,
   Senden einer Benachrichtigung an die erste Kommunikationsvorrichtung, die einen Benutzer auffordert, zum Kopfhörermodus zu wechseln,

Senden einer Benachrichtigung an die erste Kommunikationsvorrichtung, die den Benutzer auffordert, das Mikrofon der ersten Kommunikationsvorrichtung stummzuschalten,

Senden einer Benachrichtigung an die erste Kommunikationsvorrichtung, die den Benutzer auffordert, den Lautsprecher der ersten Kommunikationsvorrichtung stummzuschalten, und

Unterdrücken von Audio, das von der ersten Kommunikationsvorrichtung empfangen wird.

4. Verfahren nach einem der vorstehenden Ansprüche, wobei das Verfahren weiter umfasst:

Bestimmen, dass die Wiedergabelautstärke der ersten Kommunikationsvorrichtung über einem Wiedergabelautstärkeschwellenwert liegt,

wobei die eine oder mehreren Maßnahmen gegen akustische Rückkopplung als Reaktion darauf, dass bestimmt wird, dass die Wiedergabelautstärke über dem Wiedergabelautstärkeschwellenwert liegt, eines oder mehrere des Folgenden beinhalten:

Senden einer Benachrichtigung an die erste Kommunikationsvorrichtung, die den Benutzer auffordert, zum Kopfhörermodus zu wechseln, oder

Verringern, mittels des Abschwächungsmoduls, der Wiedergabelautstärke der ersten Kommunikationsvorrichtung,

wobei der Wiedergabelautstärkeschwellenwert basierend auf einem oder mehreren der Entfernung zwischen der ersten Kommunikationsvorrichtung und der zweiten Kommunikationsvorrichtung und einer Mikrofonverstärkung der zweiten Kommunikationsvorrichtung bestimmt wird.

5. Verfahren nach einem der vorstehenden Ansprüche, wobei das Verfahren weiter umfasst:

Bestimmen, dass die Mikrofonverstärkung der zweiten Kommunikationsvorrichtung über einem Mikrofonverstärkungsschwellenwert liegt,

wobei die eine oder mehreren Maßnahmen gegen akustische Rückkopplung als Reaktion darauf, dass bestimmt wird, dass die Mikrofonverstärkung über dem Mikrofonverstärkungsschwellenwert liegt, Verringern, mittels des Abschwächungsmoduls, der Mikrofonverstärkung der zweiten Kommunikationsvorrichtung beinhalten,

wobei der Mikrofonverstärkungsschwellenwert basierend auf einem oder mehreren der Entfernung zwischen der ersten Kommunikationsvorrichtung und der zweiten Kommunikationsvorrichtung und der Wiedergabelautstärke der zweiten Kommunikationsvorrichtung bestimmt wird.

6. Verfahren nach einem der vorstehenden Ansprüche, wobei die Sensorinformationen der ersten Kommunikationsvorrichtung auf einem nichtakustischen Sensor der ersten Kommunikationsvorrichtung basieren.

7. Verfahren nach Anspruch 6, wobei die Sensorinformationen der ersten Kommunikationsvorrichtung auf einer drahtlosen Kommunikationsschnittstelle der ersten Kommunikationsvorrichtung basieren.

8. Verfahren nach einem der vorstehenden Ansprüche, wobei eines oder mehrere des Erkennungsmoduls und des Abschwächungsmoduls in der ersten Kommunikationsvorrichtung bereitgestellt werden, oder wobei das Kommunikationssystem die erste Kommunikationsvorrichtung, die zweite Kommunikationsvorrichtung und einen Kommunikationsserver umfasst, wobei eines oder mehrere des Erkennungsmoduls und des Abschwächungsmoduls in dem Kommunikationsserver bereitgestellt sind.

9. Verfahren nach einem der vorstehenden Ansprüche, wobei der Lautsprecher der ersten Kommunikationsvorrichtung ein eingebauter Lautsprecher ist und wobei das Mikrofon der zweiten Kommunikationsvorrichtung ein eingebautes Mikrofon ist.

10. Kommunikationssystem, das eine erste Kommunikationsvorrichtung, die einen Lautsprecher und einen Sensor umfasst, eine zweite Kommunikationsvorrichtung umfasst, die ein Mikrofon, ein Erkennungsmodul und ein Abschwächungsmodul umfasst, wobei das System dazu konfiguriert ist, das Verfahren nach einem der Ansprüche 1 bis 9 durchzuführen.

**Revendications**

1. Procédé de gestion du retour acoustique dans les communications audio en temps réel dans un système de communication (2) comprenant un premier dispositif de communication (21a) comprenant un haut-parleur et un second dispositif de communication (21b) comprenant un microphone, le procédé comprenant :

   la détermination (10), au moyen d'un module de détection, pour établir si le premier dispositif de communication est en mode haut-parleur sur la base d'informations matérielles dans le premier dispositif de communication ;
   la détermination (11), au moyen du module de détection, pour établir si le premier dispositif de communication est en communication audio en temps réel avec le second dispositif de communication sur la base d'informations de connexion dans le premier dispositif de communication ;
   la détermination (12), au moyen du module de détection, pour établir si le premier dispositif de communication et le second dispositif de communication se trouvent dans un même espace acoustique sur la base d'informations de capteur dans le premier dispositif de communication ;
   lors de la détermination au moyen du module de détection que :

      le premier dispositif de communication est en mode haut-parleur,
      le premier dispositif de communication est en communication audio en temps réel avec le second dispositif de communication, et
      le premier dispositif de communication et le second dispositif de communication sont dans le même espace acoustique, la fourniture (13), à un module d'atténuation, d'un signal de demande pour demander une ou plusieurs mesures à l'encontre du retour acoustique, le procédé comprenant en outre :

         la détermination, au moyen du module de détection, d'une distance entre le premier dispositif de communication et le second dispositif de communication sur la base des informations de capteur dans le premier dispositif de communication ;
         **caractérisé par** :

            la détermination, au moyen du module de détection, d'un volume de lecture du premier dispositif de communication sur la base des informations matérielles dans le premier dispositif de communication ; et
            la détermination, au moyen du module de détection, d'un gain de microphone du second dispositif de communication sur la base des informations matérielles dans le second dispositif de communication,
            dans lequel le premier dispositif de communication et le second dispositif de communication sont déterminés comme étant dans le même espace acoustique si la distance entre le premier dispositif de communication et le second dispositif de communication est inférieure à un seuil de distance, le seuil de distance étant basé sur le volume de lecture déterminé du premier dispositif de communication et le gain de microphone déterminé du second dispositif de communication.

2. Procédé selon la revendication 1, comprenant en outre :
   la fourniture, par le module d'atténuation, d'une ou plusieurs mesures à l'encontre du retour acoustique en réponse à la réception, au niveau du module d'atténuation, du signal de demande.

3. Procédé selon l'une quelconque des revendications précédentes, dans lequel les une ou plusieurs mesures à l'encontre du retour acoustique incluent un ou plusieurs des éléments suivants :

   la diminution, au moyen du module d'atténuation, du volume de lecture du premier dispositif de communication,
   la diminution, au moyen du module d'atténuation, du gain de microphone du second dispositif de communication,
   l'envoi d'une notification au premier dispositif de communication demandant à un utilisateur de passer en mode casque,
   l'envoi d'une notification au premier dispositif de communication demandant à l'utilisateur de couper le microphone du premier dispositif de communication,
   l'envoi d'une notification au premier dispositif de communication demandant à l'utilisateur de couper le son du haut-parleur du premier dispositif de communication, et
   la suppression de l'audio reçu du premier dispositif de communication.

4. Procédé selon l'une quelconque des revendications précédentes, dans lequel le procédé comprend en outre :

la détermination que le volume de lecture du premier dispositif de communication est supérieur à un seuil de volume de lecture,

dans lequel les une ou plusieurs mesures à l'encontre du retour acoustique, en réponse à la détermination que le volume de lecture est supérieur au seuil de volume de lecture, incluent un ou plusieurs des éléments suivants :

l'envoi d'une notification au premier dispositif de communication demandant à l'utilisateur de passer en mode casque ou

la diminution, au moyen du module d'atténuation, du volume de lecture du premier dispositif de communication,

dans lequel le seuil de volume de lecture est déterminé sur la base d'un ou plusieurs de la distance entre le premier dispositif de communication et le second dispositif de communication et d'un gain de microphone du second dispositif de communication.

5. Procédé selon l'une quelconque des revendications précédentes, dans lequel le procédé comprend en outre :

la détermination que le gain de microphone du second dispositif de communication est supérieur à un seuil de gain de microphone,

dans lequel les une ou plusieurs mesures à l'encontre du retour acoustique, en réponse à la détermination que le gain de microphone est supérieur au seuil de gain de microphone, incluent la diminution, au moyen du module d'atténuation, du gain de microphone du second dispositif de communication,

dans lequel le seuil de gain de microphone est déterminé sur la base d'un ou plusieurs de la distance entre le premier dispositif de communication et le second dispositif de communication et du volume de lecture du second dispositif de communication.

6. Procédé selon l'une quelconque des revendications précédentes, dans lequel les informations de capteur du premier dispositif de communication sont basées sur un capteur non acoustique du premier dispositif de communication.

7. Procédé selon la revendication 6, dans lequel les informations de capteur du premier dispositif de communication sont basées sur une interface de communication sans **fil** du premier dispositif de communication.

8. Procédé selon l'une quelconque des revendications précédentes, dans lequel un ou plusieurs du module de détection et du module d'atténuation sont disposés dans le premier dispositif de communication ou, dans lequel le système de communication comprend le premier dispositif de communication, le second dispositif de communication et un serveur de communication, dans lequel un ou plusieurs du module de détection et du module d'atténuation sont disposés dans le serveur de communication.

9. Procédé selon l'une quelconque des revendications précédentes, dans lequel le haut-parleur du premier dispositif de communication est un haut-parleur intégré et dans lequel le microphone du second dispositif de communication est un microphone intégré.

10. Système de communication comprenant un premier dispositif de communication comprenant un haut-parleur et un capteur, un second dispositif de communication comprenant un microphone, un module de détection et un module d'atténuation, le système étant configuré pour mettre en œuvre le procédé selon l'une quelconque des revendications 1 à 9.

1

10

11

12

13

FIG. 1

FIG. 2a

FIG. 2b

21a"

210a

30a

211a

31a

20"

32

2"

30b

210b

211b

31b

21b"

# FIG. 2c

40

4

41

# FIG. 3

FIG. 4

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 21154740
- CN 2020138271 W
- US 63142018
- EP 3070876 A1
- EP 3253039 A1
- US 2018124128 A1